# EUROPÄISCHE PATENTSCHRIFT

(11) **EP 1 494 838 B1**
(45) Veröffentlichungstag und Bekanntmachung des Hinweises auf die Patenterteilung: **27.07.2005**
(21) Anmeldenummer: 02791597.4
(22) Anmeldetag: 22.11.2002
(51) Int. Cl.: B27N 3/00

(54) **VERFAHREN UND ANLAGE ZUR WIEDERGEWINNUNG VON SPÄNEN UND FASERN AUS HOLZWERKSTOFFRESTSTÜCKEN**
METHOD AND INSTALLATION FOR RECOVERING CHIPS AND FIBERS FROM TIMBER PRODUCT REMNANTS
PROCEDE ET INSTALLATION POUR RECUPERER DES COPEAUX ET DES FIBRES A PARTIR DE RESIDUS DE MATERIAUX DERIVES DU BOIS

(30) Priorität: 17.04.2002 DE 10216954
(43) Veröffentlichungstag der Anmeldung: 12.01.2005
(73) Patentinhaber: FRAUNHOFER-GESELLSCHAFT ZUR FÖRDERUNG DER ANGEWANDTEN FORSCHUNG E.V., 80686 München (DE)
(72) Erfinder: GRUBER, Timon, 38108 Braunschweig (DE)
(74) Vertreter: Stornebel, Kai, Dipl.-Ing.
(86) Internationale Anmeldenummer: PCT/DE2002/004297
(87) Internationale Veröffentlichungsnummer: WO 2003/086721

(56) Entgegenhaltungen:
- EP-A- 0 581 039
- DE-A- 19 509 152

## Beschreibung

Die Erfindung betrifft ein Verfahren zur Wiedergewinnung von Spänen und Fasern aus mit Harnstoff-Formaldehyd-Bindemitteln oder mit anderen hydrolysierbaren oder chemisch aufschließbaren Bindemitteln verleimten Holzwerkstoffreststücken, Altmöbeln, Produktionsrückständen, Abfällen und anderen holzwerkstoffhaltigen Materialien.

Die Erfindung betrifft ferner eine Anlage zur Weiterbehandlung der durch Aufschluss erzielten Späne.

Der DE 195 09 152 A1 ist ein Verfahren und eine Anlage gemäß dem Oberbegriff der Ansprüche 1 und 6 zur Wiedergewinnung von Spänen und Fasern aus mit Harnstoff-Formaldehyd-Bindemitteln oder mit anderen hydrolysierbaren oder chemisch aufschließbaren Bindemitteln verleimten Holzwerkstoffreststücken, Altmöbeln, Produktionsrückständen, Abfällen und anderen holzwerkstoffhaltigen Materialien zu entnehmen.

Bei diesem vorbekannten Verfahren sollen die Holzwerkstoffstücke flächig sein und eine Kantenlänge von mindestens 10 - 20 cm aufweisen. Der Imprägnieroder Aufschlussbehälter kann ein rotierender Behälter oder aber mit einem Mischoder Rührwerk ausgestattet sein. Die Imprägnierung kann bei Unterdruck, Überdruck oder aber einer Kombination hiervon durchgeführt werden. Der lmprägnierlösung können Laugen wie z.B. Natronlauge, Säuren wie z.B. Schwefelsäure, Oxydations- oder Reduktionsmittel, Bindemittel wie z.B. Harnstoff-Formaldehydharze, Bindemittel konservierende oder Bindemittel aktivierende Substanzen, alle Chemikalien in einer Gesamtkonzentration bis zu 30 %, zugegeben werden.

Der Erfindung liegt die Aufgabe zugrunde, die Qualität der nach den vorstehend beschriebenen Verfahren gewonnenen Späne bzw. Fasern so zu steigern, dass der Anteil dieses Recyclingmaterials bei der Span- bzw. Faserplattenproduktion auf über 20 % erhöht werden kann.

Diese Aufgabe wird erfindungsgemäß durch folgende Verfahrensschritte gelöst:
a) den Holzwerkstoffstücken wird eine Tränk- bzw. Imprägnierlösung zugegeben;
b) nachdem die Holzwerkstoffstücke mindestens 50 % ihres Eigengewichtes an Tränk- bzw. Imprägnierlösung aufgenommen haben, wird etwaig noch im Überschuss vorhandene Lösung abgelassen;
c) die so getränkten bzw. imprägnierten Holzwerkstoffstücke werden durch Erwärmung auf 80°C - 120°C aufgeschlossen;
d) das durch diesen Aufschluss erzielte Material wird zur Chlorid-Entfrachtung in einer eine Temperatur von >40°C aufweisenden Waschflüssigkeit gewaschen;
e) anschließend werden die so gewaschenen Späne von der Waschflüssigkeit getrennt und dann getrocknet;
f) die so separierte, mit dem aus den Spänen ausgewaschenem Chlor sowie mit organischen Komponenten befrachtete Waschflüssigkeit wird dann zu einem entsorgungsfähigen Abwasser aufbereitet.

Eine Anlage zur Weiterbehandlung der durch Aufschluss erzielten Späne bzw. Fasern weist zur Lösung der genannten Aufgabe erfindungsgemäß folgende Anlagenkomponenten auf:
a) ein einstufiger thermischer Rührreaktor, in dem die Späne mit Waschflüssigkeit beaufschlagt werden;
b) ein dem Reaktor nachgeschalteter Separator, der eine Austragvorrichtung für die gereinigten Späne sowie eine Ablasseinrichtung für die Waschflüssigkeit aufweist;
c) ein dem Separator nachgeschalteter Trockner für die gereinigten Späne;
d) eine an die Ablasseinrichtung des Separators angeschlossene Aufbereitungsanlage für die mit dem aus den Spänen ausgewaschenem Chlor sowie mit organischen Komponenten befrachtete Waschflüssigkeit.

Weitere Merkmale der Erfindung sind Gegenstand der Unteransprüche und werden anhand eines Ausführungsbeispieles näher erläutert.

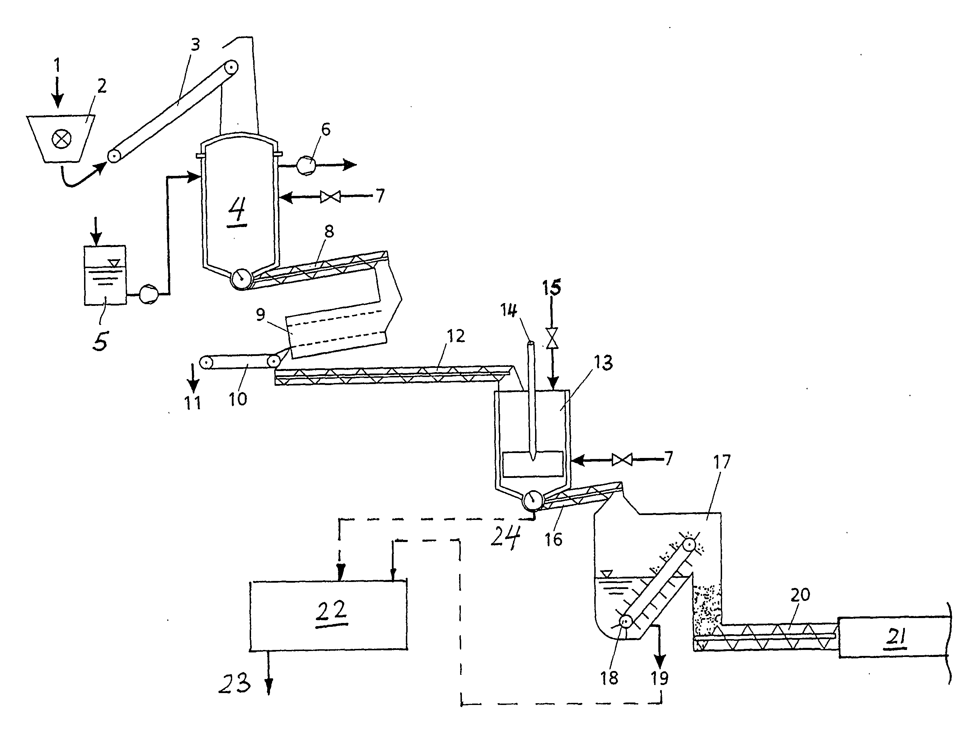

In der Zeichnung ist eine Anlage zur Wiedergewinnung von Spänen und Fasern aus Holzwerkstoffstücken schematisch dargestellt.

Bei 1 werden Holzwerkstoffreststücke, Altmöbel, Produktionsrückstände, Abfälle oder andere holzwerkstoffhaltige Materialien in einen Brecher 2 eingespeist, wo sie zu Stücken mit einer Kantenlänge von 10 - 20 cm gebrochen werden, um so einerseits ein optimales Schüttgewicht zu erzielen, andererseits aber eine mechanische Schädigung der Späne und Fasern weitgehend zu vermeiden. Die so vorgebrochenen Holzwerkstoffstücke werden über einen Förderer 3 in einen Druckbehälter 4 eingespeist, an den ein Hydrolysierbehälter 5 angeschlossen ist, der bedarfsweise mit Hydrolysierflüssigkeiten und -zusätzen befüllt wird, die über eine Pumpe in den Druckbehälter 4 eingeleitet werden. Zur Evakuierung des Innenraumes des Druckbehälters 4 ist an diesen eine Vakuumpumpe 6 angeschlossen. Zur Erwärmung der im Druckbehälter 4 befindlichen Tränk- bzw. Imprägnierlösung bzw. der getränkten bzw. imprägnierten Holzwerkstoffstücke ist bei 7 eine Zufuhr eines Heizmediums (Dampf/Heißwasser) vorgesehen.

Der Druckbehälter 4 kann mit einem Misch- oder Rührwerk ausgestattet oder aber als um seine lotrechte Mittelachse drehbarer Behälter ausgebildet sein, um das Durchmischen der Holzwerkstoffstücke mit der Tränk- bzw. Imprägnierlösung zu intensivieren. Imprägnierung und Temperatureinwirkung zur Erwärmung der Holzwerkstücke auf 80°C - 120°C finden gleichzeitig statt. Die jeweils zugegebene Tränk- bzw. lmprägnierlösung kann so bemessen werden, dass die gesamte Flüssigkeit durch die Holzwerkstoffstücke aufgenommen worden ist, wenn die Holzwerkstoffstücke 50 % ihres Eigengewichtes an Tränk- bzw. Imprägnierlösung aufgenommen haben. Wird hingegen die Tränk- bzw. Imprägnierlösung im Überschuss zugegeben, wird die restliche Flüssigkeit abgelassen, nachdem die Holzwerkstoffstücke zumindest 50 % ihres Eigengewichtes an Tränk- bzw. Imprägnierlösung aufgenommen haben.

Zur Beschleunigung der Imprägnierung kann der Aufschlussvorgang im Druckbehälter 4 bei Unterdruck erfolgen. Grundsätzlich ist es auch möglich, die Behandlung der Holzwerkstoffstücke im Druckbehälter 4 unter Überdruck oder aber unter einer Kombination von Unter- und Überdruck durchzuführen.

Das durch den Aufschluss erzielte Material wird aus dem Druckbehälter 4 z.B. über einen Schneckentrog oder eine Zellenradschleuse ausgetragen und gemäß dem dargestellten Ausführungsbeispiel über eine Förderschnecke 8 einer Störstoffabscheidung 9 zugeführt, aus der Störstoff 11 (z.B. Metallteile) über einen Förderer 10 abgefördert werden. Die verbleibenden Rohspäne werden über einen Schneckenförderer 12 in einen thermischen Rührreaktor 13 eingespeist, der mit einem Rührwerk 14 ausgestattet ist und einen Zufuhranschluss für Waschflüssigkeit 15 und einen Zufuhranschluss für ein Heizmedium 7 (Dampf/Heißwasser) aufweist.

In dem thermischen Rührreaktor 13 werden die durch Aufschluss erzielten Rohspäne zur Chlorid-Entfrachtung in der eine Temperatur von >40°C aufweisenden Waschflüssigkeit 15 gewaschen, wodurch eine Reduktion der Chlorfracht auf < 100 mg/kg erreicht wird. Das aus den Spänen ausgewaschene Chlor befrachtet entsprechend das Waschwasser mit 50 - 300 mg/l; zusätzlich ist das entstehende Abwasser des Waschprozesses mit organischen Komponenten belastet. Nach einer Verweilzeit der Späne von 10 - 20 Minuten in der Waschflüssigkeit wird das Späne/Waschflüssigkeit-Gemisch über einen Förderer 16 in einen Separator 17 eingespeist, in dem die feuchten, warmen Späne über einen Kratzkettenförderer 18 von dem mit Schadstoffen belasteten Waschwasser getrennt werden, das bei 19 aus dem Separator 17 abgezogen wird. Die separierten Späne werden über einen Schneckenförderer 20 abgefördert und durchlaufen anschließend einen dem Separator 17 nachgeschalteten Trockner 21. Durch die direkte Zufuhr der vorgewärmten Späne zum Trockner 21 werden Energieverluste vermieden.

Das mit dem aus den Spänen ausgewaschenen Chlor sowie mit organischen Komponenten belastete Waschwasser wird einer Aufbereitungsanlage 22 zugeführt und hier zu einem entsorgungsfähigen Abwasser 23 aufbereitet. Diese Abwasserreinigung ist vorzugsweise für eine Konzentration von 500 - 1.500 mg C/l gelösten organischen Kohlenstoffs (DOC), einen chemischen Sauerstoffbedarf (CSB) mit 500 - 4.000 mg O₂/l und einem biologischen Sauerstoffbedarf (BSB₅) mit 100 - 1.500 mg O₂/l ausgelegt. Die Aufbereitung der Waschflüssigkeit kann im lonenaustauscher-Verfahren, durch Entspannungsflotation oder An-Oxidation durchgeführt werden.

Der Austrag der Späne aus dem Rührreaktor 13 erfolgt z.B. über einen Schneckentrog mit Sieb, an das unmittelbar ein Ablass 24 für zumindest einen Teil der Waschflüssigkeit 15 angeschlossen ist, die dann ebenfalls in die Aufbereitungsanlage 22 eingespeist wird. Die im Schneckentrog umlaufende Schnecke kratzt das Sieb immer frei.

## Patentansprüche

1. Verfahren zur Wiedergewinnung von Spänen und Fasern aus mit Harnstoff-Formaldehyd-Bindemitteln oder mit anderen hydrolysierbaren oder chemisch aufschließbaren Bindemitteln verleimten Holzwerkstoffreststükken, Altmöbeln, Produktionsrückständen, Abfällen und anderen holzwerkstoffhaltigen Materialien, mit folgenden Verfahrensschritten:
a) den Holzwerkstoffstücken wird eine Tränk- bzw. Imprägnierlösung zugegeben;
b) nachdem die Holzwerkstoffstücke mindestens 50 % ihres Eigengewichtes an Tränk- bzw. Imprägnierlösung aufgenommen haben, wird etwaig noch im Überschuss vorhandene Lösung abgelassen;
c) die so getränkten bzw. imprägnierten Holzwerkstoffstücke werden durch Erwärmung auf 80°C - 120°C aufgeschlossen;
**dadurch gekennzeichnet, daß**
d) das durch diesen Aufschluss erzielte Material zur Chlorid-Entfrachtung in einer eine Temperatur von >40°C aufweisenden Waschflüssigkeit gewaschene wird;
e) anschließend die so gewaschenen Späne von der Waschflüssigkeit getrennt und dann getrocknet werden;
f) die so separierte, mit dem aus den Spänen ausgewaschenem Chlor sowie mit organischen Komponenten befrachtete Waschflüssigkeit dann zu einem entsorgungsfähigen Abwasser aufbereitet wird.

2. Verfahren nach Anspruch 1, wobei die Tränkung bzw. Imprägnierung bei Unterdruck erfolgt.

3. Verfahren nach Anspruch 1 oder 2, wobei das aufgeschlossene Material vor seiner Waschung eine Störstoffabscheidung (9) durchläuft.

4. Verfahren nach Anspruch 1, 2 oder 3, wobei die Verweilzeit der Späne in der Waschflüssigkeit etwa 10 - 20 Minuten beträgt.

5. Verfahren nach einem der vorhergehenden Ansprüche, wobei die Aufbereitung der Waschflüssigkeit im lonenaustauscher-Verfahren, durch Entspannungsflotation oder An-Oxidation durchgeführt wird.

6. Anlage zur Weiterbehandlung der - insbesondere nach dem Verfahren gemäß Anspruch 1 - durch Aufschluss erzielten Späne und Fasern mit folgenden Anlagenkomponenten:
a) ein einstufiger thermischer Rührreaktor (13), in dem die Späne mit Waschflüssigkeit (15) beaufschlagt werden;
b) ein dem Reaktor (13) nachgeschalteter Separator (17), der eine Austragvorrichtung (18) für die gereinigten Späne sowie eine Ablasseinrichtung (19) für die Waschflüssigkeit aufweist;
**gekennzeichnet durch**
c) ein dem Separator (17) nachgeschalteter Trockner (21) für die gereinigten Späne;
d) eine an die Ablasseinrichtung (19) des Separators (17) angeschlossene Aufbereitungsanlage (22) für die mit dem aus den Spänen ausgewaschenem Chlor sowie mit organischen Komponenten befrachtete Waschflüssigkeit.

7. Anlage nach Anspruch 6, wobei im Boden des Rührreaktors (13) für den Austrag der Späne ein Schneckentrog mit Sieb vorgesehen ist, an das ein Ablass (24) für Waschflüssigkeit (15) angeschlossen ist.

8. Anlage nach Anspruch 7, wobei der Ablass (24) für Waschflüssigkeit (15) an die Aufbereitungsanlage (22) angeschlossen ist.

## Claims

1. Process for recovering chips and fibres from residual wood-base material pieces, used furniture, production residues, wastes and other materials containing wood-base materials, which are being glued with urea/formaldehyde binders or with other hydrolyzable or chemically digestible binders, comprising the following process steps:
a) a steeping or impregnating solution is added to the wood-base material pieces;
b) after the wood-base material pieces have absorbed at least 50% of their own weight of steeping or impregnating solution, any solution still present in excess is discharged;
c) the wood-base material pieces steeped or impregnated in this manner are digested by heating to 80°C - 120°C;
**characterized in that**
d) the material obtained by this digestion is washed in a wash liquid having a temperature of >40°C for removing the chloride load;
e) thereafter the chips washed in this manner are separated from the wash liquid and then dried;
f) the wash liquid separated in this manner and laden with the chlorine washed out of the chips and with organic components is then treated to give a disposable wastewater.

2. Process according to Claim 1, the steeping or impregnation being effected under reduced pressure.

3. Process according to Claim 1 or 2, the digested material passing through a stage (9) for deposition of impurities prior to the washing thereof.

4. Process according to Claim 1, 2 or 3, the residence time of the chips in the wash liquid being about 10 - 20 minutes.

5. Process according to any of the preceding claims, the treatment of the wash liquid in the ion exchange process being carried out by dissolved air flotation or partial oxidation.

6. Plant for the further treatment of the chips and fibres obtained by digestion, in particular by the process according to Claim 1, comprising the following plant components:
a) a one-stage thermal stirred reactor (13) in which the chips are brought into contact with wash liquid (15);
b) a separator (17) which is downstream of the reactor (13) and has a discharge apparatus (18) for the cleaned chips and an outlet means (19) for the wash liquid;
**characterized by**
c) a dryer (21) downstream of the separator (17) and intended for the cleaned chips;
d) a treatment unit (22) connected to the outlet means (19) of the separator (17) and intended for the wash liquid laden with the chlorine washed out of the chips and with organic components.

7. Plant according to Claim 6, a screw trough having a screen being provided in the bottom of the stirred reactor (13) for discharging the chips, to which screen an outlet (24) for wash liquid (15) is connected.

8. Plant according to Claim 7, the outlet (24) for wash liquid (15) being connected to the treatment unit (22).

## Revendications

1. Procédé pour récupérer des copeaux et des fibres à partir de résidus de matériaux dérivés du bois, vieux meubles, résidus de fabrication, déchets et autres matériaux contenant du bois, encollés avec des liants urée-formaldéhyde ou avec d'autres liants hydrolysables ou attaquables chimiquement, comprenant les étapes de procédé suivantes :
a) ajouter aux morceaux de matériaux dérivés du bois une solution d'imbibition ou d'imprégnation ;
b) une fois que les morceaux de matériaux dérivés du bois ont absorbé au moins 50% de leur poids propre en solution d'imbibition ou d'imprégnation, laisser écouler l'éventuelle solution se trouvant encore en excès ;
c) désagréger les morceaux de matériaux dérivés du bois ainsi imbibés ou imprégnés, par échauffement à 80°-120°C;
**caractérisé par**
d) laver dans un fluide de lavage ayant une température de plus de 40°C le matériau obtenu par cette désagrégation pour le décharger en chlorures ;
e) ensuite, séparer du fluide de lavage les copeaux ainsi lavés puis les sécher;
f) traiter le fluide de lavage ainsi séparé, chargé de composants organiques ainsi que du chlore enlevé des copeaux par lavage, pour obtenir une eau d'égout éliminable.

2. Procédé selon la revendication 1, dans lequel l'imbibition ou imprégnation a lieu sous dépression.

3. Procédé selon la revendication 1 ou 2, dans lequel le matériau désagrégé passe par une séparation de substance parasite (9) avant son lavage.

4. Procédé selon la revendication 1, 2 ou 3, dans lequel le temps de séjour des copeaux dans le fluide de lavage est d'environ 10-20 mn.

5. Procédé selon l'une des revendications précédentes, dans lequel on effectue le traitement du fluide de lavage par le procédé à échangeur d'ions, par flottation de détente ou an-oxydation.

6. Installation pour poursuivre le traitement des copeaux et des fibres obtenus par désagrégation -en particulier selon le procédé de la revendication 1- comprenant les composants d'installation suivant :
a) un réacteur thermique à agitateur (13) à un étage, dans lequel du fluide de lavage (15) agit sur les copeaux ;
b) un séparateur (17) placé à la suite du réacteur (13), comportant un dispositif d'extraction (18) pour les copeaux nettoyés ainsi qu'un dispositif d'écoulement (19) pour le fluide de lavage;
**caractérisé par** :
c) un sécheur (21) pour les copeaux nettoyés, placé à la suite du séparateur (17) ;
d) une installation de traitement (22) raccordée au dispositif d'écoulement (19) du séparateur (17), pour le fluide de lavage chargé de composants organiques ainsi que du chlore enlevé des copeaux par lavage.

7. Installation selon la revendication 6, dans laquelle il est prévu dans le fond du réacteur à agitateur (13), pour l'extraction des copeaux, une auge à vis avec tamis, à laquelle est raccordé un écoulement (24) pour fluide de lavage (15).

8. Installation selon la revendication 7, dans laquelle l'écoulement (24) pour le fluide de lavage (15) est raccordé à l'installation de traitement (22).
